# EUROPEAN PATENT APPLICATION

(11) **EP 3 291 106 A1**
(43) Date of publication of application: **07.03.2018**
(21) Application number: 16785877.8
(22) Date of filing: 21.04.2016
(51) Int. Cl.: G06F 17/30

(54) **INFORMATION ACQUISITION METHOD, DEVICE AND SYSTEM**

(30) Priority: 30.04.2015 CN 201510218046
(71) Applicant: Alibaba Group Holding Limited, Grand Cayman (KY)
(72) Inventor: YI, Xiaoou, Hangzhou Zhejiang 311121 (CN)
(74) Representative: Wilson, Alan Stuart
(86) International application number: PCT/CN2016/079830
(87) International publication number: WO 2016/173446

(57) **Abstract**

The present application relates to a method, an apparatus and a system of obtaining information. The method includes receiving hyperlink(s) included in audio(s); sending the hyperlink(s) to a server; receiving first information data that is determined according to the hyperlink(s) from the server; generating an information list based on the first information data; and displaying the information list to allow a user to obtain information based on the information list. As can be seen from above, the information acquisition method provided by the present application can obtain information included in an audio when the audio is played by a playback device, without the need of human memorization.

## Description

### Cross Reference to Related Patent Applications

The present application claims priority to Chinese Patent Application No. 201510218046.5, filed on April 30, 2015, entitled "Information Acquisition Method, Device and System," which is hereby incorporated by reference in its entirety.

### Technical Field

The present application relates to the field of information transmission, and particularly to information acquisition methods, apparatuses, and systems.

### Summary

The present application provides a method, an apparatus, and a system of obtaining information, to enable a client terminal to obtain information included in audio when the audio is played by a playback device, without the need of human memorization.

In a first aspect, an information acquisition method is provided. The method includes receiving a hyperlink included in an audio; sending the hyperlink to a server; receiving first information data that is determined according to the hyperlink from the server; generating an information list based on the first information data; and displaying the information list to allow a user to obtain information based on the information list.

Preferably, receiving the hyperlink included in the audio includes collecting the audio via an audio collection unit; detecting whether the audio includes hyperlink information; and identifying and extracting the hyperlink information in response to the audio including the hyperlink information.

Preferably, the method further includes obtaining preference information of the user, and sending the preference information to the server, wherein receiving the first information data that is determined according to the hyperlink from the server includes receiving first information data that is determined according to the hyperlink and the preference information from the server.

In a second aspect, an information acquisition method is provided. The method includes receiving a hyperlink from a terminal, the hyperlink being a hyperlink included in an audio that is received by the terminal; determining first information data based on the hyperlink; and sending the first information data to the terminal, to enable the terminal to generate an information list based on the first information data, and display the information list to allow a user to obtain information based on the information list.

Preferably, the method further includes receiving preference information of the user from the terminal, wherein determining the first information data based on the hyperlink includes determining the first information data based on the hyperlink and the preference information.

Preferably, the method further includes obtaining historical data corresponding to a user identifier of the user, and determining a preference of the user based on the historical data, wherein determining the first information data based on the hyperlink includes determining the first information data based on the hyperlink and the preference.

In a third aspect, an information acquisition apparatus is provided. The apparatus is deployed in a terminal, and the apparatus includes a receiving unit configured to receive a hyperlink included in an audio; a sending unit configured to send the hyperlink to a server, wherein the receiving unit is further configured to receive first information data that is determined according to the hyperlink from the server; a generation unit configured to generated an information list based on the first information data; and a display unit configured to display the information list to allow a user to obtain information based on the information list.

Preferably, the receiving unit includes a collection subunit configured to collect the audio via an audio collection unit; a detection subunit configured to detect whether the audio collected by the collection subunit includes hyperlink information; and an extraction subunit configured to identify and extract the hyperlink information in response to the detection subunit detecting that the audio includes the hyperlink information.

Preferably, the apparatus further includes an acquisition unit configured to obtain preference information of the user, wherein the sending unit is further configured to send the preference information obtained by the acquisition unit to the server, and the receiving unit is further configured to receive the first information data that is determined according to the hyperlink and the preference information from the server.

In a fourth aspect, an information acquisition apparatus is provided. The apparatus is deployed in a server, and the apparatus includes a receiving unit configured to receive a hyperlink from a terminal, the hyperlink being a hyperlink included in an audio that is received by the terminal; a determination unit configured to determine first information data based on the hyperlink; and a sending unit configured to send the first information data to the terminal, to enable the terminal to generate an information list based on the first information data, and display the information list to allow a user to obtain information based on the information list.

Preferably, the receiving unit is further configured to receiving preference information of the user from the terminal, and the determination unit is further configured to determine the first information data according to the hyperlink and the preference information received by the receiving unit.

Preferably, the apparatus further includes an acquisition unit configured to obtain historical data corresponding to a user identifier of the user, wherein the determination unit is further configured to determine a preference of the user based on the historical data obtained by the acquisition unit, and determine the first information data according to the hyperlink and the preference.

In a fifth aspect, an information acquisition system is provided. The system includes a playback device, a terminal, and a server. The playback device is configured to play an audio, the audio including a hyperlink. The terminal is configured to receive the hyperlink included in the audio played by the playback device, send the hyperlink to the server, receive first information data determined according to the hyperlink from the server, generate an information list based on the first information data, and display the information list to enable a user to obtain information based on the information list.

The server is configured to receive the hyperlink from the terminal, the hyperlink being the hyperlink included in the audio received by the terminal, determine the first information data according to the hyperlink, send the first information data to the terminal to enable the terminal to generate the information list based on the first information data, and display the information list to allow the user to obtain information based on the information list.

The present application provides an information acquisition method, which first receives a hyperlink included in an audio, sends the hyperlink to a server, receives first information data determined according to the hyperlink from the server, generates an information list based on the first information data, and displays the information list to allow a user to obtain information based on the information list. As can be seen from above, the information acquisition method provided by the present application can automatically obtain information included in an audio when the audio is played by a playback device, without the need of human memorization.

### Brief Description of the Drawings

FIG. 1 is a flowchart of an information acquisition method provided by embodiments of the present application.
FIG. 2 is a schematic diagram of a user setting in accordance with the embodiments of the present application.
FIG. 3(A) - FIG. 3(D) are schematic diagrams of a user interface of an application in accordance with the embodiments of the present application.
FIG. 4 is a flowchart of another information acquisition method provided by embodiments of the present application.
FIG. 5 is a schematic diagram of information category matching in accordance with the embodiments of the present application.
FIG. 6 is a flowchart of signals of a information acquisition method provided by embodiments of the present application.
FIG. 7 is a structural diagram of an information acquisition apparatus provided by embodiments of the present application.
FIG. 8 is a structural diagram of another information acquisition apparatus provided by embodiments of the present application.
FIG. 9 is a structural diagram of an information acquisition system provided by embodiments of the present application.

### Detailed Description

In order to make the goals, technical solutions and advantages of the present application more clearly, the technical solutions in the embodiments of the present application are described herein in conjunction with the drawings in the embodiments of the present application in a clear and comprehensive manner. Apparently, the described embodiments represent a portion and not all of the embodiments of the present application. Based on the embodiments in the present application, all the other embodiments that can be obtained one of ordinary skill in the art without making any creative effort shall fall within the scope of protection of the present application.

In order to facilitate the understanding of the embodiments of the present application, exemplary embodiments are described in further detail herein in conjunction with the accompanying drawings. These embodiments should not be construed as limitations to the embodiments of the present application.

The embodiments of the present application provide an information acquisition method. The method is applicable to any scenarios that provide playing of an audio. For example, when a user is inside a car that has a car radio, a microphone of a terminal can automatically detect a hyperlink embedded in an audio that is played by the car radio. The terminal then interacts with a server, and obtains information from the server. The terminal displays the obtained information to the user according to the needs of the user at any time. The terminal may be, but is not limited to, a user device such as a mobile phone.

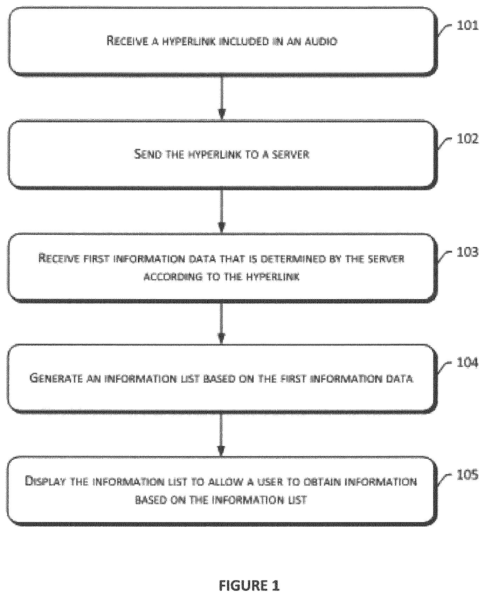

FIG. 1 is a flowchart of an information acquisition method provided by the embodiments of the present application. An execution entity of this method is a terminal. As shown in FIG. 1, the method includes:
Step 101 receives a hyperlink included in an audio.

In the embodiments of the present application, an audio may be collected via an audio collection unit. A detection of whether the audio includes hyperlink information may be performed. If the audio includes hyperlink information, the hyperlink information is identified and extracted.

Specifically, a microphone of a terminal may be used as an audio collection unit. The microphone collects an audio. A hyperlink is coded as a special audio element that is non-audible by a user in the audio. An audio frequency of the hyperlink may be situated outside a normal audible range of 20 Hz - 20 kHz. Each hyperlink has a starting point and an ending point. An audio frequency received by the microphone can implement receiving a hyperlink included in an audio only.

Normally, a microphone has two states, namely, an active state and an inactive state. When receiving a hyperlink included in an audio via a microphone, a terminal also needs to set a state of the microphone to be an active state.

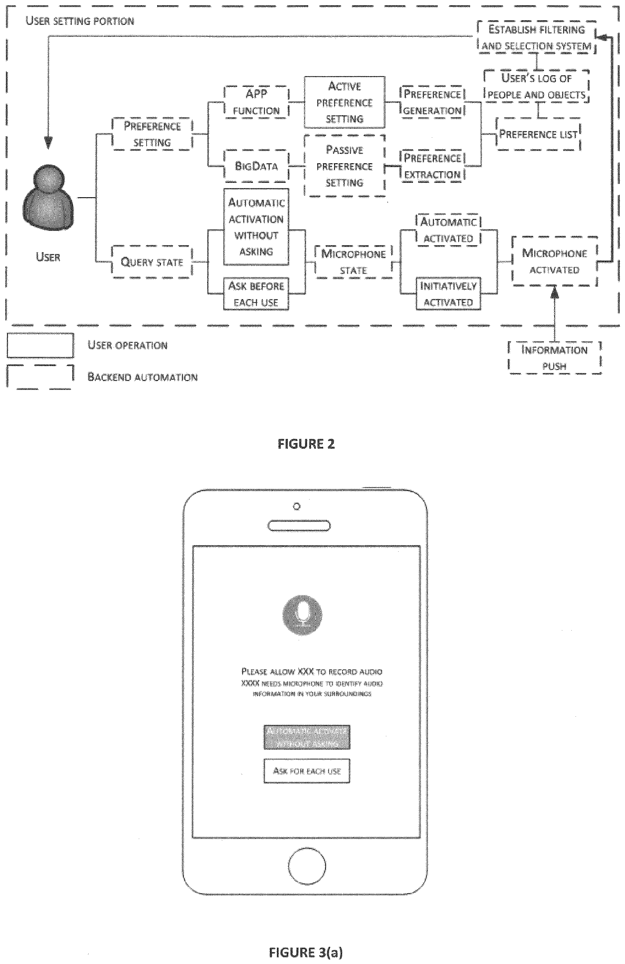

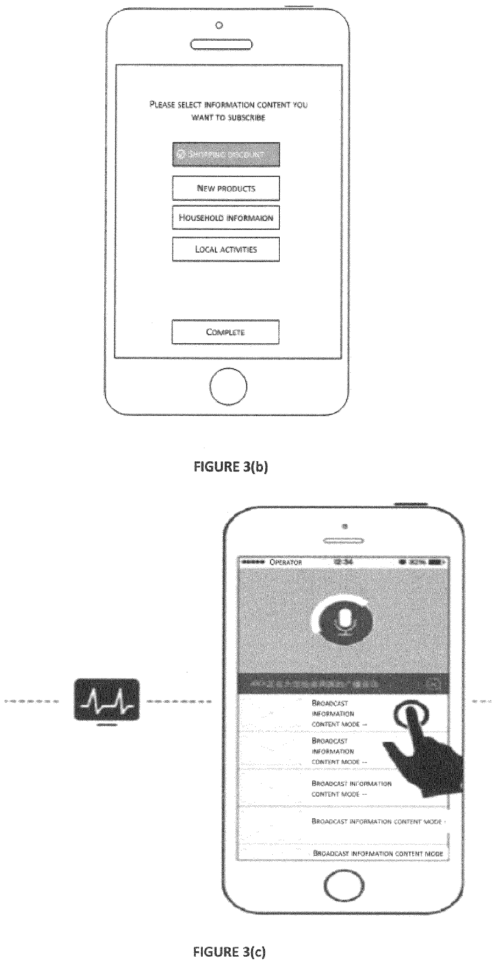

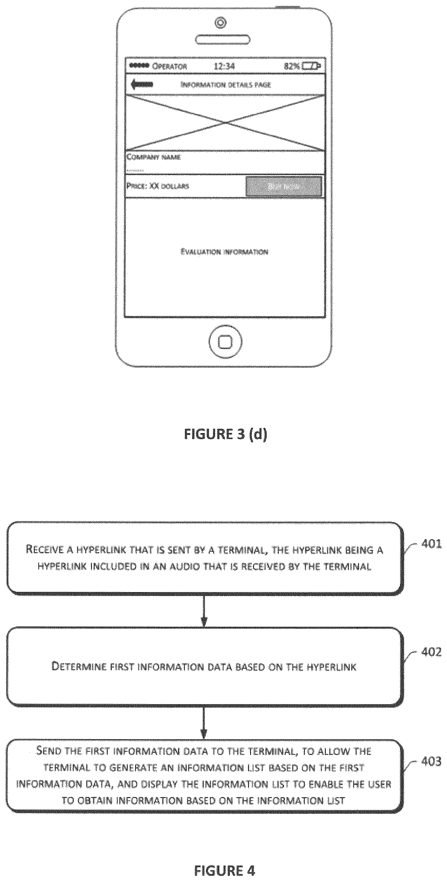

FIG. 2 is a schematic diagram of a user setting. Since the information acquisition method may be implemented by an application (APP) that is loaded into the terminal, a query state for opening a microphone may be set up for a user when the APP is initially loaded. The query state includes two types of states: automatic open without asking, and asking for each use. FIG. 3(A) - FIG. 3(D) are schematic diagrams of a user interface of an APP. In FIG. 3(A), if the terminal receives a selection of a query state of automatic open without asking from the user, the microphone is automatically activated without the need of checking with the user about whether to activate the microphone, each time when the APP is opened. If the terminal receives a selection of a query state of asking for each use, the user is asked as to whether to activate the microphone each time when the APP is opened. The microphone is activated if confirmation information indicating that the user approves an activation of the microphone is received. If confirmation information indicating that the user disapproves the activation of the microphone is received, the microphone is not activated. If a selection of a query state of asking for each use is received from a user, the terminal can allow the user to confirm whether to activate the microphone at a time outside a stage of collecting hyperlinks. The terminal does not activate the microphone in response to receiving confirmation information indicating that the microphone is not to be activated from the user, thus saving power and reducing the occupancy of backend memory to a certain extent. For example, after leaving a driving scenario, the microphone does not need to be activated continuously even though the APP is opened during a stage of browsing information via the APP. In FIG. 3(B), the user may configure information content that he/she desires to subscribe, and this information content is treated as a user preference. In FIG. 3(C), by finding a hyperlink included in an audio, the terminal decodes and displays the found hyperlink in a form of information. The user can open a corresponding information details page by clicking related information. In FIG. 3(D), the terminal display an information details page in a user interface, e.g., group purchase discount information.

In order to facilitate a server to perform information selection, only information that is of interest to the user is sent to the terminal. The server needs to obtain a preference list of the user, establish the user's record of people and objects, and thereby establish a selection system. The server performs a selection of the information through the selection system. The preference list of the user may be obtained through an active preference setting, a passive preference setting, or a combination of these two settings.

In the embodiments of the present application, the method may further include obtaining preference information of the user; and sending the preference information to the server. An active preference setting may be performed by a user through configuration of preference setting. For example, when an APP is initially loaded, a user may be requested to select scope(s) or categor(ies) of information that he/she desires to subscribe and receive. A preference list may be generated through activities of clicking entries by the user, thus completing the active preference setting.

A server may analyze historical records of a user and extract preferences of the user to obtain a passive preference setting. For example, when the APP is initially loaded, a request may be sent to the server for analyzing purchase records of the user on Taobao website. Categor(ies) and scope(s) of products that are desirable by the user may be extracted by analyzing records of products that are of interests, and products that have been bought, etc., thus completing the passive preference setting.

Step 102 sends the hyperlink to the server.

After a predefined time period, the terminal sends all hyperlinks that are received within the predefined time period to the server. In order to reduce the occupancy of the memory and the computation cost of the terminal, the terminal is only responsible for identifying and collecting hyperlinks, and sending the collected hyperlinks to the server for processing. The server has a preconfigured amount of workload for data, and thus can ensure a smooth computation at the back end.

Step 103 receives first information data that is determined by the server based on the hyperlink.

After the terminal obtains the preference information of the user in advance, and sends the preference information to the server, the server determines first information data based on the hyperlink. The method includes receiving the first information data that is determined by the server based on the hyperlink.

Step 104 generates an information list based on the first information data.

The terminal may insert the first information data into an APP frame to generate an information list through the APP that is installed therein. Each piece of information in the information list may jump to a details page that is generated by the server. Entries in the information list may be arranged according to an order of time, and stored in an information region of the APP.

Step 105 displays the information list, to enable the user to obtain information based on the information list.

In the embodiments of the present application, in response to receiving an instruction from the user, the terminal may open an information region of the APP that corresponds to the information list for display. The user may click and browse an entry in the information list to obtain information, or to delete the entry.

As can be seen from above, the information acquisition method provided by the present application can automatically obtain information included in an audio via a terminal when the audio is played by a playback device, without the need of human memorization.

FIG. 4 is a flowchart of another information acquisition method provided by the present application. An execution entity of this method is a server. As shown in FIG. 4, the method includes:
Step 401 receives a hyperlink that is sent by a terminal, the hyperlink being a hyperlink included in an audio that is received by the terminal.
Step 402 determines first information data based on the hyperlink.

In the embodiments of the present application, the server may determine first information data based on the hyperlink only, or may determine the first information data based on the hyperlink and a preference of a user.

The terminal may determine the preference of the user. The server first receives preference information of the user from the terminal, and then determines the first information data based on the hyperlink and the preference.

Alternatively, the server may determine the preference of the user. The server obtains historical data corresponding to a user identifier of the user, and determines the preference of the user based on the historical data. The server determines the first information data based on the hyperlink and the preference.

Alternatively, the preference of the user may first be determined by the terminal, and the preference is then updated by the server. The server receives the preference information of the user that is sent by the terminal, obtains the historical data corresponding to the user identifier of the user, updates the preference based on the historical data, and determine the first information data based on the hyperlink and the updated preference.

In the embodiments of the present application, determining the first information data based on the hyperlink may include a process of decoding hyperlink(s), and a process of matching and filtering information categor(ies).

Decoding the hyperlink(s) refers to extracting an information category from a respective page pointed by each hyperlink by the server. For example, a category of a product is extracted from a respective product page that is pointed by each hyperlink.

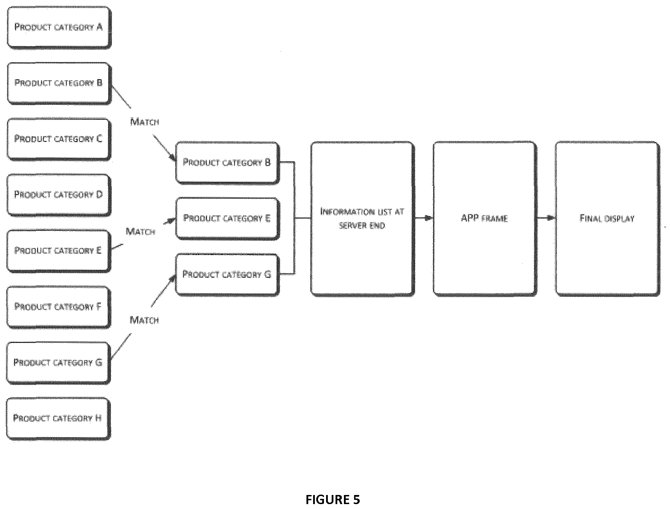

Matching and filtering the categor(ies) refers determining whether the information category matches with an information category in a preference selection system after the information category is extracted through the hyperlink. Details can be referred to a schematic diagram of information category matching as shown in FIG. 5. If a determination result is affirmative, information corresponding to the hyperlink is determined to be value information. The value information may be information of a product category that the user is concerned about. An information list is generated at the server. The information list is constructed by codes, i.e., the first information data. The first information data is pushed to the terminal that is used by the user. If the determination result is negative, the information corresponding to the hyperlink is determined to be garbage information. The garbage information may be information of a product category that the user does not care about, and is filtered out at the server,

Step 403 sends the first information data to the terminal, to allow the terminal to generate an information list based on the first information data, and display the information list to enable the user to obtain information based on the information list.

Each piece of information in the information list can jump to a details page that is generated by the server. Entries in the information list are arranged in an order of time, and are stored in an information region of the APP. The user can browse and delete an entry by opening the information region via the terminal.

In the embodiments of the present application, the user clicks an entry for browsing and triggering a presentation of a details page. In the details page, a payment page may be jumped into, thus facilitating the user to complete a payment at the payment page, and achieving a purchase of a product.

As can be seen from above, the information acquisition method provided by the embodiments of the present application automatically pushes information to a terminal through a server after the server receives a hyperlink from the terminal. A user can then browse the information through the terminal if needed, without the need of human memorization.

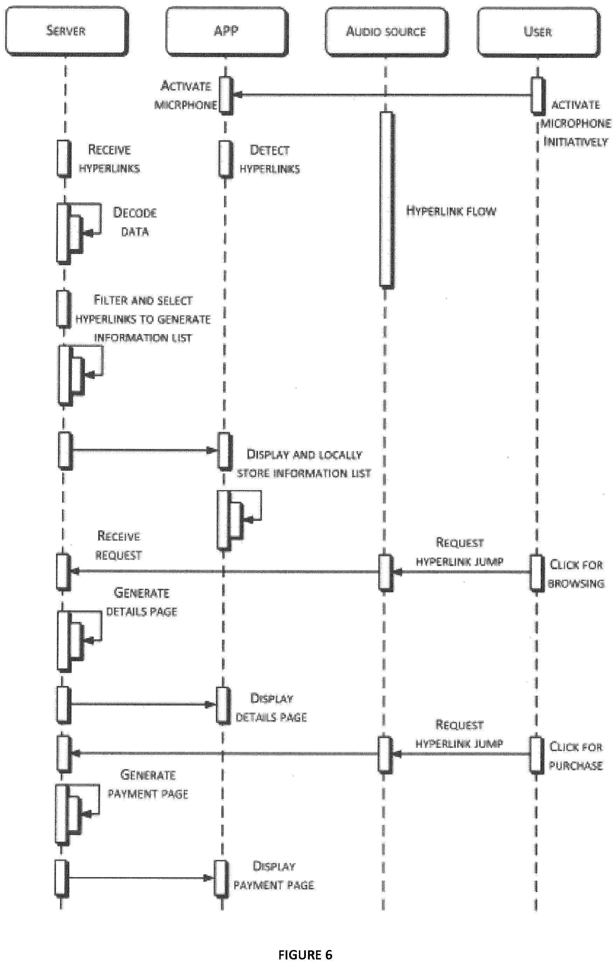

FIG. 6 is a flowchart of signals of an information acquisition method provided by the embodiments of the present application. The method is applicable in a specific application scenario in which a user is situated in a car environment having a car radio. A mobile phone is used as a terminal for collecting a hyperlink. As shown in FIG. 6, the method includes:
Step 1: In response to receiving an instruction of activating a microphone from a user, an APP of a mobile phone sets the microphone in an active state.
Step 2: The APP of the mobile phone detects and receives hyperlinks included in an audio via the microphone, wherein a source of the audio is a car radio, and the audio is an audio played by the car radio.
Step 3: A server receives the hyperlink sent by the APP of the mobile phone.
Step 4: The server performs data decoding on the hyperlinks.
Step 5: The server filters and selects hyperlink(s) using a pre-established filtering and selection system.
Step 6: The server generates an information list based on the selected hyperlink(s).
Step 7: The server sends the information list to the APP of the mobile phone.
Step 8: The APP of the mobile phone displays the information list, and locally stores the information list.
Step 9: When the user clicks an entry in the information list for browsing, the APP of the mobile phone submits a request to the server for a link jump.
Step 10: Upon receiving the request, the server generates a details page corresponding to the entry.
Step 11: The server sends the details page to the APP of the mobile phone, which displays the details page.
Step 12: In response to receiving a click from the user for instructing a purchase, the APP of the mobile phone submits a request to the server for a link jump.
Step 13: Upon receiving the request for the link jump, the server generates a payment page.
Step 14: The server sends the payment page to the APP of the mobile phone, which displays the payment page.

The information acquisition method provided by the embodiments of the present application consider the inconvenience of a user to operate a mobile device in a driving scenario. Passively receiving information helps improving the safety of driving as compared to a traditional mode. Using a completely new way of pushing a hyperlink facilitates a company to expand channels for offline broadcasting of advertisements. The user does not need to memorize the broadcasted content, and can directly save related information in a mobile phone, thus reducing the usage cost of the user when the information is obtained. The completion of continuously automatic pushing and recording at the backend does not conflict with driving activities, thus improving the user experience of receiving the information in the driving scenario. The pushed information is directly linked to a product page, thereby effectively reducing a purchase process.

Given a linkage between a car radio and an APP of a mobile phone, the embodiments of the present application directionally push information that is highly relevant in a car scenario according to an automatic decoding of an audio hyperlink, and control a number, a frequency and content categories of audio hyperlinks based on user group oriented data and geographical location, thereby leading the accuracy and affinity of the information to a desirable effect.

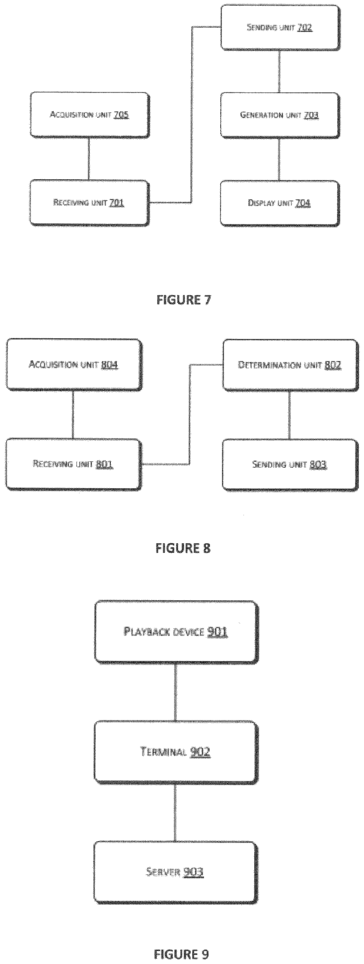

FIG. 7 is a structural diagram of an information acquisition apparatus provided by the embodiments of the present application. The apparatus is deployed in a terminal. As shown in FIG. 7, the apparatus includes a receiving unit 701 configured to receive hyperlinks included in audios; a sending unit 702 configured to send the hyperlinks received by the receiving unit 701 to a server; the receiving unit 701 further configured to receive first information data that is determined by the server based on the hyperlinks sent by the sending unit 702; a generation unit 703 configured to generate an information list based on the first information data received by the receiving unit 701; and a display unit 704 configured to display the information list generated by the generation unit 703, to allow a user to obtain information based on the information list.

Preferably, the receiving unit 701 includes a collection subunit configured to collect an audio via an audio collection unit; a detection subunit configured to detect whether the audio collected by the audio collection unit includes hyperlink information; and an extraction subunit configured to identify and extract the hyperlink information in response to the detection subunit detecting that the audio includes the hyperlink information.

Preferably, the apparatus further includes an acquisition unit 705 configured to obtain preference information of the user, wherein the sending unit 702 is further configured to send the preference information obtained by the acquisition unit 705 to the server, and the receiving unit 701 is further configured to receiving the first information data that is determined by the server based on the hyperlinks and the preference information.

FIG. 8 is a structural diagram of another information acquisition apparatus provided by the embodiments of the present application. The apparatus is deployed in a server. As shown in FIG. 8, the apparatus includes a receiving unit 801 configured to receive hyperlinks from a terminal, the hyperlinks being hyperlinks included in audios that are received by the terminal; a determination unit 802 configured to determine first information data based on the hyperlinks received by the receiving unit 801; and a sending unit 803 configured to send the first information data determined by the determination unit 802 to the terminal, to cause the terminal to generate an information list based on the first information data and display the information list to allow a user to obtain information based on the information list.

Preferably, the receiving unit 801 is further configured to receive preference information of the user sent by the terminal, and the determination unit 802 is further configured to determine the first information data based on the hyperlinks and the preference information received by the receiving unit 801.

Preferably, the apparatus further includes an acquisition unit 804 configured to obtain historical data corresponding to a user identifier of the user, wherein the determination unit 802 is further configured to determine a preference of the user based on the historical data obtained by the acquisition unit 804.

The determination unit 802 is further configured to determine the first information data based on the hyperlinks and the preference.

FIG. 9 is a structural diagram of an information acquisition system provided by the embodiments of the present application. As shown in FIG. 9, the system includes a playback device 901, a terminal 902, and a server 903.

The playback device 901 is configured to play an audio, the audio including hyperlink(s).

The terminal 902 is configured to receive the hyperlink(s) included in the audio that is played by the playback device 901, send the hyperlink(s) to the server 903, receive first information data that is determined by the server 903 based on the hyperlink(s), generate an information list based on the first information data, and display the information list to allow a user to obtain information based on the information list.

The server 903 is configured to receive the hyperlink(s) sent by the terminal 902, the hyperlink(s) being the hyperlink(s) included in the audio that is received by the terminal 902, determine the first information data based on the hyperlink(s), send the first information data to the terminal 902 to cause the terminal 902 to generate the information list based on the first information list and display the information list to allow the user to obtain the information based on the information list.

One skilled in the art can also understand that example objects and procedures of example algorithms described in the embodiments that are disclosed in the present specification can be implemented using electronic hardware component(s), computer software component(s), or a combination thereof. In order to clearly illustrate the interchangeability of a hardware component and a software component, the foregoing specification has described components and procedures of various examples according functions in general. Whether these functions are implemented in a form of hardware component(s) or software component(s) depends on a particular application and design constraints of a technical solution. One skilled in the art can use different methods for each particular application to implement the described functions, and these implementations are not outside the scope of the present application.

The operations of the methods or algorithms described in the embodiments of the present specification can be implemented using hardware component(s), processor-executable software module(s), or a combination thereof. A software module may be deployed in random access memory (RAM), cache, read-only memory (ROM), electrically programmable read-only memory (EPROM), electrically erasable programmable read-only memory (EEPROM), a register, a hard drive, a removable magnetic disk, CD-ROM, or any other storage media that is known in the art.

The goals, technical solutions and beneficial effects of the present application have been described in further detail using the above embodiments. It can be understood that the above are merely specific embodiments of the present application, and should not be used to limit the scope of the protection of the present application. All modifications, equivalent replacements, improvements, etc., that are made within the spirit and principles of the present application should be included in the scope of protection of the present application.

## Claims

1. An information acquisition method comprising:
receiving hyperlinks included in audios;
sending the hyperlinks to a server;
receiving first information data determined according to the hyperlinks from the server;
generating an information list based on the first information data; and
displaying the information list to allow a user to obtain information based on the information list.

2. The method of claim 1, wherein receiving the hyperlinks included in the audios comprises:
collecting an audio via an audio collection unit;
detecting whether the audio includes hyperlink information;
identifying and extracting the hyperlink information in response to detecting that the audio includes the hyperlink information.

3. The method of claim 1, further comprising:
obtaining information of a preference of the user; and
sending the information of the preference to the server, wherein receiving the first information data determined according to the hyperlinks from the server comprises receiving first information data determined according to the hyperlinks and the preference from the server.

4. An information acquisition method comprising:
receiving hyperlinks sent from a terminal, the hyperlinks being hyperlinks included in audios received by the terminal;
determining first information data based on the hyperlinks; and
sending the first information data to the terminal to cause the terminal to generate an information list based on the first information data and display the information list to allow a user to obtain information based on the information list.

5. The method of claim 4, further comprising receiving information of a preference of the user sent from the terminal, wherein determining the first information data based on the hyperlinks comprises determining the first information data based on the hyperlinks and the preference.

6. The method of claim 4, further comprising:
obtaining historical data corresponding to a user identifier of the user; and
determining a preference of the user based on the historical data, wherein determining the first information data based on the hyperlinks comprises determining the first information data based on the hyperlinks and the preference.

7. An information acquisition apparatus, wherein the apparatus is deployed in a terminal, the apparatus comprising:
a receiving unit configured to receive hyperlinks included in audios;
a sending unit configured to send the hyperlinks to a server, wherein the receiving unit is further configured to receive first information data that is determined according to the hyperlinks from the server;
a generation unit configured to generated an information list based on the first information data; and
a display unit configured to display the information list to allow a user to obtain information based on the information list.

8. The apparatus of claim 7, wherein the receiving unit comprises:
a collection subunit configured to collect an audio via an audio collection unit;
a detection subunit configured to detect whether the audio collected by the collection subunit includes hyperlink information; and
an extraction subunit configured to identify and extract the hyperlink information in response to the detection subunit detecting that the audio includes the hyperlink information.

9. The apparatus of claim 7, further comprising an acquisition unit configured to obtain information of a preference of the user, wherein the sending unit is further configured to send the information of the preference obtained by the acquisition unit to the server, and the receiving unit is further configured to receive the first information data that is determined according to the hyperlinks and the preference from the server.

10. An information acquisition apparatus, wherein the apparatus is deployed in a server, the apparatus comprising:
a receiving unit configured to receive hyperlinks from a terminal, the hyperlinks being hyperlinks included in audios that are received by the terminal;
a determination unit configured to determine first information data based on the hyperlinks; and
a sending unit configured to send the first information data to the terminal, to enable the terminal to generate an information list based on the first information data and display the information list to allow a user to obtain information based on the information list.

11. The apparatus of claim 10, wherein the receiving unit is further configured to receiving information of a preference of the user from the terminal, and the determination unit is further configured to determine the first information data according to the hyperlinks and the preference received by the receiving unit.

12. The apparatus of claim 10, further comprising an acquisition unit configured to obtain historical data corresponding to a user identifier of the user, wherein the determination unit is further configured to determine a preference of the user based on the historical data obtained by the acquisition unit, and determine the first information data according to the hyperlinks and the preference.

13. An information acquisition system comprising: a playback device, a terminal, and a server, wherein:
the playback device is configured to play an audio, the audio including hyperlinks;
the terminal is configured to receive the hyperlinks included in the audio played by the playback device, send the hyperlinks to the server, receive first information data determined according to the hyperlinks from the server, generate an information list based on the first information data, and display the information list to enable a user to obtain information based on the information list; and
the server is configured to receive the hyperlinks from the terminal, the hyperlinks being the hyperlinks included in the audio received by the terminal, determine the first information data according to the hyperlinks, send the first information data to the terminal to enable the terminal to generate the information list based on the first information data and display the information list to allow the user to obtain information based on the information list.
